# NEUE EUROPÄISCHE PATENTSCHRIFT

(11) **EP 2 275 304 B2**
(45) Veröffentlichungstag und Bekanntmachung des Hinweises auf die Entscheidung über den Einspruch: **05.10.2016**
(45) Hinweis auf die Patenterteilung: 12.09.2012
(21) Anmeldenummer: 10168053.6
(22) Anmeldetag: 01.07.2010
(51) Int. Cl.: B60H 1/00, B60N 2/48, B60H 1/22, H05B 3/34, B60N 2/56

(54) **Kraftfahrzeug mit einem Ausstattungsteil**
Motor vehicle with a fitting piece
Véhicule automobile doté d'une pièce d'équipement

(30) Priorität: 17.07.2009 DE 102009033654
(43) Veröffentlichungstag der Anmeldung: 19.01.2011
(73) Patentinhaber: Bayerische Motoren Werke Aktiengesellschaft, 80809 München (DE)
(72) Erfinder: Lein, Rudolf, 85221, Dachau (DE); Franz, Matthias, 83098, Brannenburg (DE)

(56) Entgegenhaltungen:
- WO-A1-2008/155893
- DE-A1- 10 046 216
- DE-A1- 10 151 307
- DE-A1- 10 163 051
- DE-A1- 10 204 707
- DE-A1- 19 647 935
- DE-A1-102007 015 841
- DE-A1-102007 039 423
- DE-B4- 19 808 571
- DE-U1- 20 313 055
- JP-A- H11 217 035
- US-A- 4 335 725
- DIN 5031 (Lexikon)

## Beschreibung

Die Erfindung bezieht sich auf eine Vorrichtung der im Oberbegriff des ersten Anspruchs angegebenen Art.

Aus der DE 196 47 935 A1 ist eine elektrische Zusatzheizeinrichtung als Innenraumheizung für Wohnwagen bekannt. Diese Heizung ist so ausgelegt, dass langwellige Infrarot Strahlung emittiert und so ein angenehmes Strahlungsklima erzeugt.

Eine Kopfstütze mit eingebauter Infrarotheizung ist aus der DE 100 46 216 C2 bekannt. Hier dient sie als Zusatzheizung für offene Fahrzeuge. Diese Zusatzheizeinrichtung besteht aus einer Halogenlampe als Infrarotstrahler mit einem Reflektor sowie einem Luftführungskanal mit einem Gebläse. Aufgrund dieser Anordnung strahlt die Halogenlampe Infrarot-A-oder Infrarot-B-Wärmestrahlung ab.

Da die beteiligten Bauteile der Zusatzeinrichtung eine Mindestbaugröße aufweisen, lässt sich diese nur schwer in Kopfstützen, die gemäß Sicherheitsaspekten konstruiert sind, unterbringen.

Allgemein ist es bekannt, die Infrarot-Strahlung in drei Bereiche aufzuteilen, nämlich die Infrarot-A-, die Infrarot-B und die Infrarot-C-Strahlung. Die Infra-rot-A-/B-Strahlung entwickelt ihre Wärme bei Menschen unterhalb der Haut und wird deshalb insbesondere für medizinische Zwecke angewandt. Aus diesem Bereich kommen auch die als Höhensonnen bekannten InfrarotStrahler, die auch in einer Vielzahl von Haushalten zu finden sind.

Aus der JP 11217035 A ist ein Aufsatzteil für einen Kraftfahrzeugsitz bekannt, das mit einem elastischen Band an der Kopfstütze fixierbar ist. Das Aufsatzteil weist eine V-förmige Aussparung auf, in die ein Sitzinsasse seinen Nacken einbringen kann. An einer Aufnahmefläche der Aussparung ist ein Infrarotstrahler vorgesehen, der fernes Infrarot ausstrahlen kann.

Aufgabe der vorliegenden Erfindung ist es, eine Heizeinrichtung für den Einbau in Kopfstützen von Fahrzeugsitzen, die in offen zu fahrenden Fahrzeugen eingebaut sind, bereitzustellen.

Diese Aufgabe wird erfindungsgemäß durch die Merkmale des ersten Anspruchs gelöst. Die Unteransprüche beschreiben vorteilhafte Ausgestaltungen der Erfindung.

Durch die Verwendung von Infrarot-C-Wärmestrahlern in den Kopfstützen von Sitzen, wird der Vorteil erzielt, dass nur die Haut des Passagiers erwärmt wird und nicht auch tieferliegende Gewebebereiche. Dadurch wird schnell ein Behaglichkeitsgefühl erreicht. Auch ist es nicht erforderlich, dass die Luft zwischen dem Passagier und der Heizeinrichtung zuerst erwärmt wird, wie es bei konventionell aufgebauten Heizanlagen erforderlich ist. Damit tritt die Heizwirkung gerade bei Cabrios unmittelbar ein, auch wenn es bei Anwendung in den Kopfstützen eines Cabrios Luftverwirbelungen um den Hals- und Nackenbereich des Cabriopassagiers aufgrund des Offenfahrens in einem Fahrzeug gibt. Somit wird eine deutlich höhere thermische Behaglichkeit des Passagiers erreicht und negative Effekte, wie Verspannung der Halswirbelsäule, aufgrund von Zugluft vermieden. Ein weiterer Vorteil der Verwendung von Infrarot-C-Strahlung besteht darin, dass der Sitzende sich wärmer fühlt, als es bei der aktuellen Raumtemperatur bzw. Umgebungstemperatur der Fall wäre.

Ein weiterer Vorteil der Erfindung besteht darin, dass damit ein geringerer Energieverbrauch als bei konventionellen elektrischen Heizungssystemen oder auch bei dem im Stand der Technik bekannten Ausgestaltungen gegeben, da dort zumindest noch ein Gebläse angetrieben werden muss.

Die Weiterbildung nach Anspruch 2 eignet sich insbesondere gut zur Verwendung in Kopfstützen, da die am Markt bekannten Folien weder das Volumen noch den Einbauraum der Kopfstütze nennenswert verändern.

Anspruch 3 beschreibt einen vorteilhaften Einbauort.

Wie bei Fahrzeugsitzheizungen bekannt, kann die Heizeinrichtung manuell entsprechend den Wünschen des Passagiers geschaltet werden, es ist jedoch auch denkbar - wie Anspruch 5 vorschlägt - die Heizeinrichtung mit einer automatisch arbeitenden Steuereinrichtung zu verbinden, die in an sich bekannter Weise sinnvolle Parameter gerade bei einem offen zu fahrenden Fahrzeug miteinander kombiniert, wie beispielsweise Sitzbelegung, Außentemperatur, Fahrgeschwindigkeit, Sonneneinstrahlung, geöffnetes oder geschlossenes Verdeck bei Cabrios, geöffnetes oder geschlossenes Schiebedach etc.

Die erfindungsgemäße Heizeinrichtung kann, wie Patentanspruch 6 vorschlägt und es bei einem Einbau in Kopfstützen in der Regel der Fall sein wird, als Zusatzheizeinrichtung zur regulären Fahrzeugheizung angeordnet werden.

Im Folgenden wird die Erfindung in den Figuren 1 und 2 anhand bevorzugter Ausführungsbeispiele näher erläutert. Figur 3 zeigt ein Ausführungsbeispiel außerhalb der beanspruchten Erfindung. Es stellen dar:

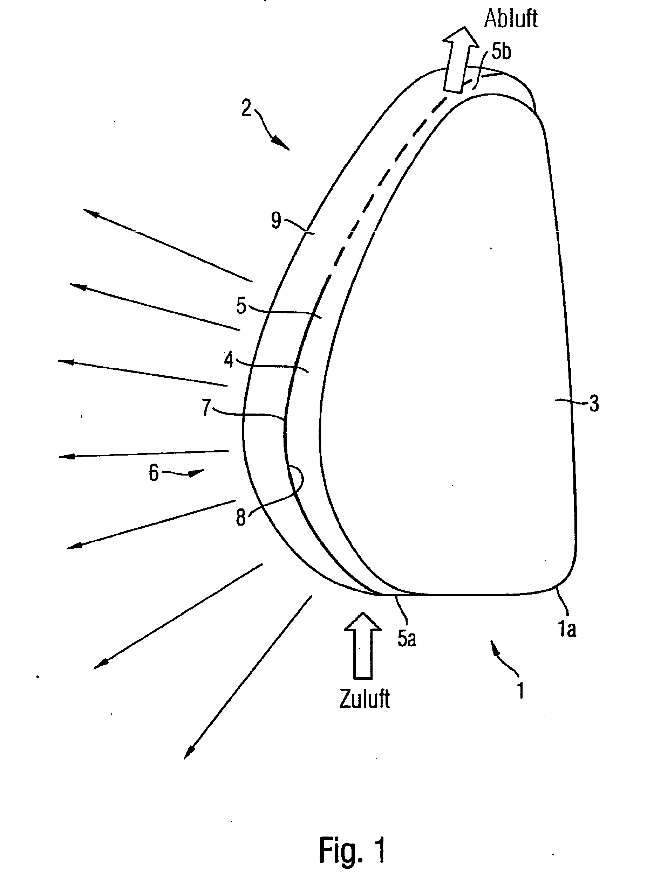

Figur 1: einen schematisierten Querschnitt durch eine erfindungsgemäß aufgebaute Kopfstütze;

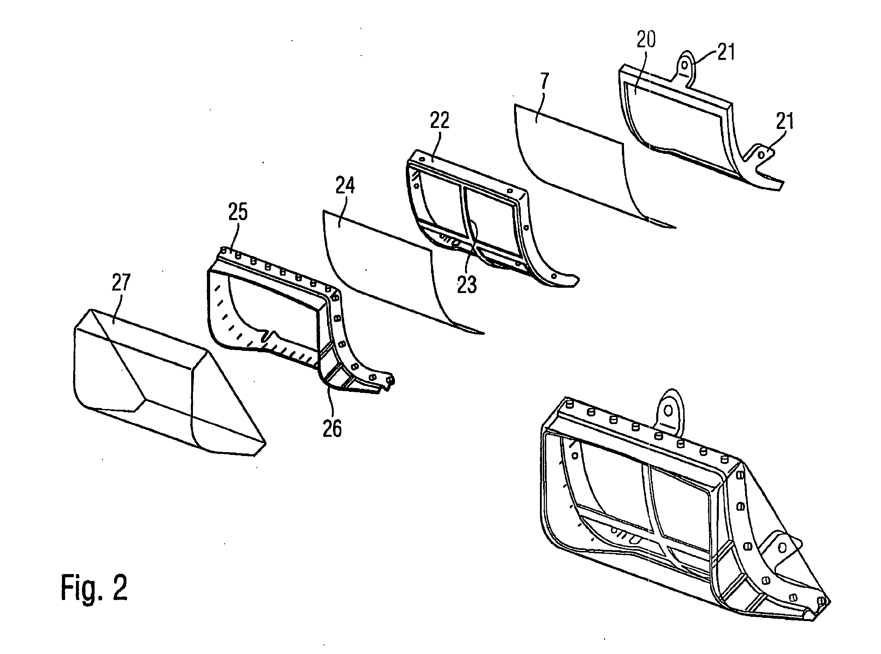

Figur 2: eine perspektivische Ansicht der beteiligten Bauelemente einer Infrarotheizungfüreine Kopfstütze;

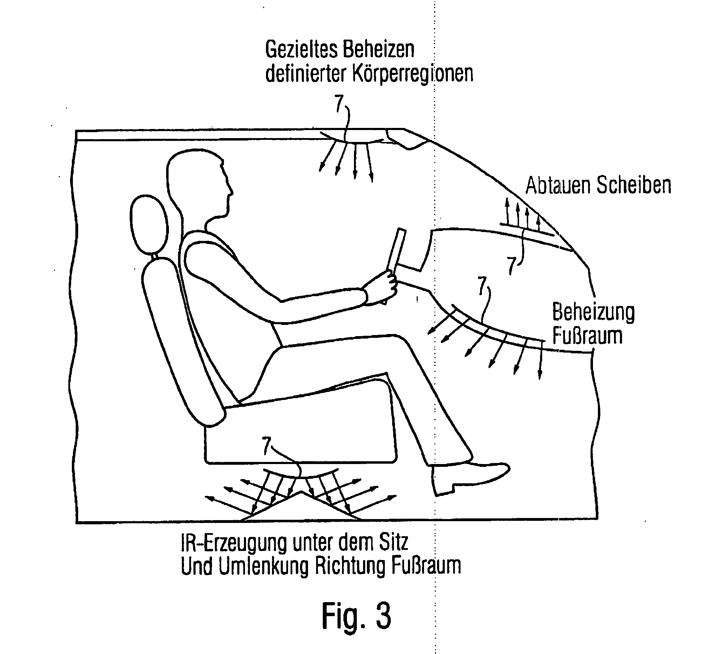

Figur 3: eine Schemaskizze weiterer Einbauorte einer Infrarotheizung.

In Figur 1 ist schematisiert ein Querschnitt durch eine erfindungsgemäß aufgebaute Kopfstütze eines ansonsten nicht näher gezeigten Sitzes eines Kraftfahrzeuges dargestellt. Hierbei ist es unerheblich, ob die Kopfstütze an der Rückenlehne eines Einzelsitzes oder an der Rückenlehne einer Sitzbank angeordnet ist. Auch spielt es keine Rolle, ob die Kopfstütze höhenverstellbar oder höhenfest mit der Rückenlehne verbunden ist.

Die durch die Erfindung bedingten Änderungen beschränken sich gemäß Figur 1 auf den vorderen, d.h. auf den dem Kopfbereich des Sitzenden zugewandten Seite 2 der Kopfstütze 1.

Üblicherweise ist unterhalb des Bezugsstoffes 1a der Kopfstütze 1 ein Rahmen und eine Schaumstoffverkleidung angebracht. Diese Schaumstoffverkleidung ist in der Abbildung gemäß Figur 1 mit 3 bezeichnet.

Die Schaumstoffverkleidung ist im vorderen Bereich der Kopfstütze 1 verkleinert ausgebildet, um Platz für die erfindungsgemäß aufgebaute Infrarot-C-Heizung zu schaffen.

Auf der Schaumstoffverkleidung 3 wird im vorderen Bereich 2 eine thermische Isolationsschicht 4 in einigen Millimetern Dicke angebracht. Sie kann so aufgebaut sein, dass sie eine Durchströmung mit Umgebungsluft gestattet. Dies kann auch ein flächiger Kanal 5 sein. Hierzu ist der Bezugsstoff 1a, der die gesamte Kopfhülle umschließt, am unteren Ende der Kopfstütze 1 und am oberen Kopfstützenende luftdurchlässig ausgestaltet. Er bildet damit mehr oder minder deutliche Öffnungen 5a und 5b für den Kanal 5.

Die thermische Isolationsschicht 4 kann aus einem Abstandsgewirke bestehen, das steif genug ist, sich unter den Kräften, die sich beim Anlehnen des Kopfes des Sitzenden ergeben, nicht zu verformen, so dass der Kanal 5 bestehen bleibt.

Auf diese thermische Isolationsschicht 4 wird im Auflagebereich 6 des Kopfes eine elektrisch betriebene Heizfolie 7 auf die Isolationsschicht 4 aufgebracht, die geeignet ist, Infrarot-C-Strahlen zu emittieren. Hierzu wird die Heizfolie 7 auf mindestens 60°, bevorzugt zwischen 65°C und 140°C aufgeheizt.

Wird eine mit Carbon versetzte Heizfolie 7 verwendet, so weist diese eine niedrige Wärmekapazität für ein schnelles Ansprechen und Auskühlen auf. Gleichzeitig dient die geringe Wärmekapazität zur Vermeidung einer Verbrennungsgefahr.

Das ungewünschte Aufheizen der gesamten Kopfstütze verhindert der Kanal 5, in dem zumindest Luft steht, wenn nicht strömt, so dass die Luft eine Isolation für den hinteren Teil der Kopfstütze 1 bildet. Verstärkt werden kann dieser Schutz gegen Erwärmung noch dadurch, dass eine Kanalwand teilweise oder vollständig mit einem Reflexionsspiegel 8 ausgekleidet ist, der verhindert, dass die Infrarot-C-Strahlung nach hinten entgegen der Richtung zum Sitzenden hin abgestrahlt wird.

Auf der Vorderseite der Heizfolie 7, also zwischen Heizfolie 7 und Bezugsstoff 1a ist zum Kopf des Sitzenden hin wiederum eine thermische Isolationsschicht 9, beispielsweise wiederum ein steifes Abstandsgewirke, das aber für Infrarot-C-Strahlung durchlässig ist, angebracht.

Die Heizfolie 7 heizt nur im Bereich des Nakkens und der Schultern des Sitzenden. Dies ist in Figur 1 durch die durchgezogene Linie angedeutet. Im Bereich des Hinterkopfes des Sitzenden ist keine Heizwirkung notwendig und vorgesehen. Dies zeigt in Figur 1 die strichlinierte Linie an. Um die Heizfolie jedoch an den Rändern der Kopfstütze einzuspannen ist es sinnvoll, diese über die gesamte Breite und Höhe der Kopfstütze 1 auszugestalten, jedoch nur eine Beheizung im Auflagebereich 6 vorzusehen.

Der Bezugsstoff 1a der Kopfstütze 1 ist zumindest im Bereich der Heizfolie 7 (aktiven Bereich) aus einem Material, welches den Austritt der Infrarot-C-Strahlung nicht behindert. Er muss in diesem Bereich aber zuverlässig verhindern, dass Kopfhaare des Sitzenden mit der Heizfolie in Kontakt gelangen können.

Auch kann es sinnvoll sein, den Bezugsstoff 1a im Bereich der aktiven Heizfolie 7 optisch deutlich anders auszugestalten, so dass direkt optisch sichtbar ist, dass dort die Kopfstütze eine weitere Funktion aufweist. Auch kann es sinnvoll sein, den Bezugsstoff 1a der Kopfstütze in diesem Bereich bei eingeschalteter Heizfolie 7 aus der Kopfstütze heraus anzuleuchten, beispielsweise mit roten LED's, um den Passagieren anzuzeigen, dass die Heizung in Betrieb ist.

In Figur 2 ist ein möglicher konkreter Aufbau für eine Heizeinrichtung zum Einbau in eine Kopfstütze 1 perspektivisch dargestellt. Unten rechts ist die Anordnung im zusammengebauten Zustand gezeigt. Er besteht aus einem Tragrahmen 20, der an dem nicht näher dargestellten Rahmen der Kopfstütze in geeigneter Weise befestigt wird. Hierzu weist er beispielsweise geeignete Befestigungslaschen 21 auf. Der Tragrahmen 20 dient zur Aufnahme der Heizfolie 7 und zur Aufnahme einer Alu-Kaschierung 20.1, die den hinteren Teil des Rahmens abdeckt. Damit wird verhindert, dass Infrarot-C-Strahlung nach hinten austritt und den Schaumstoff (Figur 1) erwärmt. Um zu erreichen, dass der Nacken- und Schulterbereich des Passagiers erwärmt wird, ist der Tragrahmen in Richtung auf den Passagier gewölbt ausgebildet.

Die Heizfolie 7 wird über einen Rahmen 22 an dem Tragrahmen 20 eingespannt. Der Rahmen 22 besitzt an seiner Innenfläche ein Stützkreuz 23. Dieses Stützkreuz 23 dient zum Halten einer Abschirmfolie, beispielsweise einer Abschirmfolie aus PET. Diese Abschirmfolie ist auf der Vorderseite des Rahmens 22 angebracht, so dass ein Abstand zwischen der Heizfolie 7 und der Abschirmfolie 24 existiert. Die Abschirmfolie ist für Infrarot-C-Strahlen durchlässig, verhindert aber zuverlässig einen Kontakt von Haaren des Passagiers mit der Heizfolie 7.

Die Abschirmfolie 24 wird zusammen mit dem Rahmen 22 über einen Abschlussrahmen 25 an dem Tragrahmen 20 gehalten bzw. angeklemmt. Der Abschlussrahmen 25 weist in Richtung auf den Passagier verlaufende Rippen 26 auf, über die der Bezugsstoff 1a gespannt werden kann. Somit ist aufgrund des nochmals vergrößerten Abstandes des Kopfes des Passagiers von der Heizfolie 7 sichergestellt, dass zum einen keine Berührung mit der Heizfolie auftreten kann und zum anderen auch keine Haare auf die Heizfolie 7 gelangen können.

Die Abschirmfolie 24 und der Rahmen 22 sollten nur dann vorgesehen werden, wenn die Gefahr besteht, das Zugluft die Heizfolie kühlt, da sie aufgrund ihrer niedrigen Wärmekapazität hierfür sehr empfindlich ist.

Diese Sicherheit kann noch dadurch erhöht werden, dass über den Abschlussrahmen 25 ein Infrarot-C-Strahlen durchlässiges Netz 27 gespannt wird, was dann den Bezugsstoff 1a trägt.

Zum Visualisieren, dass die Kopfstütze mit einer Heizung versehen ist, kann der Bezugsstoff 1a im Bereich des Abschlussrahmens optisch anders ausgestaltet sein. Weiterhin ist es möglich, in dem Abschlussrahmen 25 eine Beleuchtung, beispielsweise rot leuchtende LED anzubringen, die mit dem Einschalten der Heizfolie 7 aktiviert werden, so dass auch optisch angezeigt wird, dass die Heizung in Betrieb ist.

Die Anordnung nach Figur 2 eignet sich sehr gutzur Vormontage dereinzelnen Bauteile, so dass dann die vormontierte Infrarot-Heizung, bestehend zumindest aus Abschlussrahmen 25, Abschirmfolie 24, Rahmen 22, Heizfolie 7 und Tragrahmen 20 vormontiert werden kann und dann an dem Kopfstützenrahmen befestigt wird, wobei vor oder nach Befestigung der Infrarot-Heizung an dem Kopfstützenrahmen die Schaumstoffpolsterung angebracht wird und dann die gesamte Kopfstütze mit dem Bezugsstoff 1 a überzogen wird.

Allgemein wird durch die Erfindung bei einer Verwendung in einer Kopfstütze eine in ihren baulichen Abmessungen nahezu unveränderte Kopfstütze für einen Fahrzeugsitz geschaffen, bei der aufgrund der abstrahlenden Infrarot-C-Strahlung die Behaglichkeit des auf dem Sitz Sitzenden wesentlich gesteigert wird, ohne dass die Sicherheitsfunktion der Kopfstütze in irgendeiner Weise beeinträchtigt werden würde. Auch wird nur ein relativ geringer Energieverbrauch benötigt, so dass sich die erfindungsgemäße Ausgestaltung gerade für Fahrzeug und hier an allen Kopfstützen als Heizmaßnahme eignet. Dadurch wird die Fahrfreude gesteigert, ohne dass Nachteile, wie Verspannung der Halswirbelsäule, des Schulter/Nackenbereiches oder anderer Bereiche des Sitzenden in Kauf genommen werden müssen.

Die in den Kopfstützen eingebaute erfindungsgemäße Infrarot-C-Heizung ist immer als Zusatzheizung für den Kopf-, Nacken -und Schulterbereich des Sitzenden gedacht, wobei eine Anwendung nicht auf Cabrios beschränkt sein muss.

Es ist aber genauso gut möglich, die Infrarot-C-Strahlung emittierenden Heizfolien an Anbauteilen (Verkleidungsteilen) des Innenraumes eines Kraftfahrzeuges vorzusehen, wie Figur 3 schematisiert zeigt. So ist es denkbar, zum Abtauen/Beschlagfreihalten der Scheiben, insbesondere der Frontscheibe eines Kraftfahrzeuges die Infrarat-Heizfolie an der Oberseite der Armaturentafel anzubringen und/oder an Oberseiten von Türbrüstungen zum Freihalten der Seitenscheiben und/ oder in der Hutablage zum Ersatz/Unterstützung der Heckscheibenheizung.

Auch kann es sinnvoll sein, eine oder mehrere Infrarot-C-Strahlung emittierende Heizfolien unter den Vordersitzen anzubringen und per Umlenkspiegel als Ersatz/Unterstützung der bekannten Fußraumheizung einzusetzen, wie ebenfalls in Figur 3 angedeutet.

Selbstverständlich muss die Heizfolie so angebracht werden, dass immer sicher ein direkter Kontakt der Passagiere mit der Heizfolie vermieden wird.

Allgemein kann die Heizfolie auch konvex bzw. konkav gewölbt sein und bedarfsweise mit (einem) Spiegel(n) zusammenarbeiten, um die Strahlung zu bündeln und damit zu intensivieren oder eine größere Streuung zu erzielen.

Damit kann sie -je nach Einbauort-die konventionelle Fahrzeugheizung, die ihre Wärme in aller Regel vom Antriebsmotor des Fahrzeugs bezieht, ersetzen oder doch zumindest unterstützen, zumal sie schneller anspricht als eine konventionelle Fahrzeugheizung. Somit kann sie auch Standheizungsfunktion übernehmen.

Bei von einem Elektromotor angetriebenen Fahrzeugen eignet sie sich als einzige Heizung, da mit ihr nicht erst die Raumluft aufgeheizt werden muss, um ein Behaglichkeitsgefühl bei den Passagieren zu entwikkeln.

## Patentansprüche

1. Kraftfahrzeug mit einem Fahrzeugsitz mit einer Kopfstütze (1) und einer Heizeinrichtung zum Erwärmen der auf den Fahrzeugsitzen sitzenden Insassen, wobei die Heizeinrichtung auf der dem Kopf des Sitzenden zugewandten Seite der Kopfstütze (1) angeordnet ist und wobei die Heizeinrichtung Infrarot-C-Strahlung erzeugt, wobei auf einer Schaumstoffverkleidung (3) im vorderen Bereich (2) der Kopfstütze (1) eine thermische Isolationsschicht (4) in einigen Millimetern Dicke angebracht ist, wobei auf die thermische Isolationsschicht (4) im Auflagenbereich (6) des Kopfes eine elektrisch betriebene Heizfolie (7) aufgebracht ist, die geeignet ist, Infrarot-C-Strahlen zu emittieren,
**dadurch gekennzeichnet, dass** die thermische Isolationsschicht (4) als flächiger Kanal (5) ausgebildet ist, so dass die Luft, die in dem Kanal (5) zumindest steht, wenn nicht strömt, eine Isolation für den hinteren Teil der Kopfstütze (1) bildet.

2. Kraftfahrzeug nach Anspruch 1,
**dadurch gekennzeichnet, dass** die Heizeinrichtung aus einem Karbon-Gewebe besteht, das in eine Bindemittelschicht eingebettet ist.

3. Kraftfahrzeug nach einem der vorangegangenen Ansprüche,
**dadurch gekennzeichnet, dass** die Heizeinrichtung unmittelbar unter dem Oberflächenbezugsstoff der Kopfstütze angeordnet ist.

4. Kraftfahrzeug nach einem der vorangegangenen Ansprüche,
**dadurch gekennzeichnet, dass** die Heizeinrichtung über eine manuell zu betätigende Schalteinrichtung geschaltet wird.

5. Kraftfahrzeug nach einem der vorangegangenen Ansprüche,
**dadurch gekennzeichnet, dass** die Heizeinrichtung über eine Steuereinrichtung in Abhängigkeit von Parametern, wie Sitzbelegung, Außentemperatur, Fahrgeschwindigkeit des Fahrzeugs, etc. gesteuert ist.

6. Kraftfahrzeug nach einem der vorangegangenen Ansprüche,
**dadurch gekennzeichnet, dass** die Infrarot-C-Strahlen erzeugende Heizeinrichtung als Zusatzheizeinrichtung zur vorhandenen, vom Antriebsmotor des Kraftfahrzeuges betriebene Heizeinrichtung vorgesehen ist.

## Claims

1. A motor vehicle having a vehicle seat with a head rest (1) and a heater for warming up the occupants sitting on the vehicle seats, wherein the heater is arranged on the side of the head rest (1) facing the seated person's head and wherein the heater generates infrared-C radiation, wherein a thermal insulation layer (4) a few millimetres thick is attached to a foam covering (3) in the front region (2) of the head rest (1), wherein applied to the thermal insulation layer (4) in the support region (6) of the head is an electrically operated heating foil (7) which is capable of emitting infrared-C rays,
**characterised in that** the thermal insulation layer (4) is configured as a flat channel (5) so that the air which is at least stationary, if not flowing, in the channel (5), forms an insulation for the rear part of the head rest (1).

2. A motor vehicle according to claim 1,
**characterised in that** the heater comprises a carbon fabric embedded in a binder layer.

3. A motor vehicle according to either of the preceding claims,
**characterised in that** the heater is disposed directly under the material covering the surface of the head rest.

4. A motor vehicle according to any one of the preceding claims,
**characterised in that** the heater is switched by a manually operated switching device.

5. A motor vehicle according to any one of the preceding claims,
**characterised in that** the heater is controlled by a control device in dependence on parameters such as occupation of seats, outdoor temperature, speed of the vehicle, etc.

6. A motor vehicle according to any one of the preceding claims,
**characterised in that** the heater generating the infrared-C rays is in addition to the existing heater operated by the engine driving the motor vehicle.

## Revendications

1. Véhicule comprenant un siège de véhicule équipé d'un appui-tête (1) et une installation de chauffage pour chauffer les passagers assis sur les sièges du véhicule, l'installation de chauffage étant installée sur le côté de l'appui-tête (1) tourné vers la tête des passagers assis et l'installation de chauffage générant un rayonnement infrarouge C, une couche d'isolation thermique (4) de quelques millimètres d'épaisseur étant appliquée sur un revêtement en matériau cellulaire (3) dans la zone avant (2) de l'appui tête (2), et, sur la couche d'isolation thermique (4), dans la zone d'appui (6) de la tête, étant appliqué un film chauffant (7) actionné électriquement, susceptible d'émettre des rayons infrarouges C,
**caractérisé en ce que**
la couche d'isolation thermique (4) est réalisée sous la forme d'un canal plat (5) de sorte que l'air, qui est situé au moins dans le canal (5) au moins lorsqu'il ne circule pas, forme une isolation pour la partie arrière de l'appui-tête (1).

2. Véhicule conforme à la revendication 1,
**caractérisé en ce que**
l'installation de chauffage est un tissu de carbone intégré dans une couche de liant.

3. Véhicule conforme à l'une des revendications précédentes,
**caractérisé en ce que**
l'installation de chauffage se trouve directement sous le revêtement d'habillage de l'appui-tête.

4. Véhicule conforme à l'une des revendications précédentes,
**caractérisé en ce que**
l'installation de chauffage est commandée par une installation de commutation manuelle.

5. Véhicule conforme à l'une des revendications précédentes,
**caractérisé en ce que**
l'installation de chauffage est commandée par une installation de commande en fonction de paramètres tels que l'occupation du siège, la température extérieure, la vitesse de circulation du véhicule, etc.

6. Véhicule conforme à l'une des revendications précédentes,
**caractérisé en ce que**
l'installation de chauffage qui génère le rayonnement infrarouge C est une installation de chauffage complémentaire à l'installation de chauf fage existante actionnée par le moteur d'entraînement du véhicule.
